Europäisches Patentamt

European Patent Office

Office européen des brevets

(11) Publication number: **0 103 146**
**B1**

# (12) EUROPEAN PATENT SPECIFICATION

(45) Date of publication of patent specification: **15.04.87**

(21) Application number: **83107714.4**

(22) Date of filing: **04.08.83**

(51) Int. Cl.⁴: **C 08 F 220/18, C 09 D 3/81**

(54) Highly weatherable coatings.

(30) Priority: **05.08.82 US 405431**

(43) Date of publication of application:
**21.03.84 Bulletin 84/12**

(45) Publication of the grant of the patent:
**15.04.87 Bulletin 87/16**

(84) Designated Contracting States:
**AT BE CH DE FR GB IT LI LU NL SE**

(56) References cited:
**FR-A-2 072 508**
**FR-A-2 146 220**
**FR-A-2 279 781**

(73) Proprietor: **UNION CARBIDE CORPORATION**
**39 Old Ridgebury Road**
**Danbury Connecticut 06817 (US)**

(72) Inventor: **Koleski, Joseph Victor**
**1513 Brentwood Road**
**Charleston, WV 25134 ) (US)**
Inventor: **Sherwin, Maynard Arthur**
**563 Edgehill Drive**
**Saint Albans, WV 25177 (US)**
Inventor: **Tailer, Robert Arthur**
**7150 Wilderness Way**
**Centerville, OH 45459 (US)**

(74) Representative: **Wuesthoff, Franz, Dr.-Ing. et al**
**Patentanwälte Wuesthoff -v. Pechmann-**
**Behrens-Goetz Schweigerstrasse 2**
**D-8000 München 90 (DE)**

**The file contains technical information submitted after the application was filed and not included in this specification**

Courier Press, Leamington Spa, England.

**Description**

Many coatings are used on surfaces which are employed in an outdoor environment. Such coatings are exposed to sunlight, moisture and the like under a variety of temperature conditions and must therefore be able to withstand such changes in climate. Among the preferred weatherable coatings are those based on acrylic polymers. However, after long exposures of time even these coatings will suffer deterioration at a pace which is dependent upon the geographical area involved.

As a result, several additives have been incorporated into coating formulations to slow down the degradative process. Among the more commonly employed additives are those which protect against ultraviolet radiation and hydrolytic attack. However, incorporation of such additives increases the cost of producing weatherable coatings. Thus it would be desirable to produce a highly weatherable coating which did not require the presence of such expensive additives.

In addition, many of the weatherable coatings heretofore employed utilize relatively large amounts of volatile organic solvents. With the rising price of energy, as well as the increased appreciation of the deleterious effects of organic solvents on the environment, it would be desirable to produce a weatherable coating which employed only a minimal amount of volatile organic solvent.

Among the compositions which have been developed in response to such need for highly weatherable coatings are those disclosed in GB—A—1,556,456, and 1,556,464 which contain copolymers consisting of 50—75 weight percent t-butyl acrylate; 5—30 weight percent styrene, vinyltoluene or methyl methacrylate; and 4—20 weight percent of acrylonitrile. However, these copolymers, which are cured by crosslinking with an aliphatic dicarboxylic acid, possess high glass transition temperatures as they have a Durran softening point of 90—120°C. Thus, as is apparent to one skilled in the art, these coatings must be applied as either (1) powders or (2) low-solids solutions, since high-solids coatings containing such polymers would be too highly viscous to be utile. Therefore coatings employing these polymers are comparatively uneconomical as the use of powders would necessitate the formation of relatively thick coatings (of at least about 38 μm) whereas a low solids solution would require the use of relatively large amounts of solvent.

Thus, it was completely unexpected that polymers of t-butyl acrylate could be produced which has comparative low glass transition temperatures (i.e. of less than about 50°C) and which when formulated into coating compositions would possess desirable weatherable properties. Moreover, because of such low glass transition temperatures, coatings employing these novel polymers may be employed in a high solids solution form thus permitting economical use of both the polymers and organic solvent.

Description of the invention

This invention is directed to polymers which, when formulated into coating compositions, demonstrate a high degree of outdoor weatherability and a coating composition containing the polymers and crosslinker.

These polymers are low molecular weight copolymers having a glass transition temperature of less than about 50°C which are comprised of:

(a) from 10 to 90 weight percent, preferably of from 20 weight percent to 70 weight percent, t-butyl acrylate units

(b) from 1 to 30 weight percent, preferably of from 5 to 20 weight percent of units derived from a functional comonomer containing at least one active crosslinking site; and

(c) from 5 to 85 weight percent, preferably of from 5 to 60 weight percent of units derived from other ethylenically unsaturated monomers which are capable of polymerizing with t-butyl acrylate excluding styrene.

The term active crosslinking site refers to a location on the comonomer which is capable of reacting with the crosslinker employed such that a crosslinkage is produced. Among the preferred functional comonomers which may be employed are those which, when reacted with t-butyl acrylate will produce a copolymer possessing an active carboxyl group, hydroxyl group, and/or amide group. If desired, mixtures of active carboxyl group producing monomers, active hydroxyl group producing monomers and/or active amide producing group monomers may be employed.

Illustrative of such carboxyl group producing monomers are alpha-unsaturated carboxylic acids such as, for example, acrylic acid, methacrylic acid, α-chloroacrylic acid, itaconic acid, crotonic acid, aconitic acid, maleic acid, and fumeric acid. Half acid esters of the dicarboxylic acids can also be used, such as methylhydrogen itaconate, butyl hydrogen itaconate, and ethyl hydrogen maleate. Mixtures of these acids can also be used. The preferred active carboxyl group producing monomers are acrylic acid and methacrylic acid.

Illustrative of active hydroxyl group producing monomers are monohydroxy- and polyhydroxy esters of acrylic acid and methacrylic acid, such as, for example, 2-hydroxyethyl acrylate and methacrylate, 2-hydroxypropyl acrylate and methacrylate, 3-hydroxypropyl acrylate and methacrylate, 2-hydroxybutyl acrylate and methacrylate, 3-hydroxybutyl acrylate and methacrylate, 4-hydroxybutyl acrylate and methacrylate, 5-hydroxyamyl acrylate and methacrylate, 6-hydroxyhexyl acrylate, and methacrylate, 8-hydroxyoctyl acrylate and methacrylate, 2,3-dihydroxypropyl acrylate and methacrylate, 2,3-dihydroxybutyl acrylate and methacrylate, and the like. Mixtures of these hydroxyalkyl esters can also be used. The preferred hydroxyalkyl esters are hydroxyethyl acrylate, hydroxyethyl methacrylate, hydroxypropyl acrylate, and hydroxypropyl methacrylate.

Illustrative of active amide group producing monomers are monomers such as acrylamide and methacrylamide.

In addition to the t-butyl acrylate and functional comonomer components, the copolymer may additionally contain other ethylenically unsaturated monomers which are capable of copolymerization with t-butyl acrylate. These comonomers may be added to the polymerization mixture to achieve desired effects well known to one skilled in the art. However, it is desirable that the incorporation of these monomers not raise the glass transition temperature of the resultant copolymer above about 50°C so that such copolymers produced may be employed in high solids coating compositions. Exemplary of such ethylenically unsaturated monomers are acrylic ester and methacrylic esters such as, for example methyl acrylate, ethyl acrylate, propyl acrylate, isopropyl acrylate, butyl acrylate, isobutyl acrylate, sec-butyl acrylate, n-amyl acrylate, isoamyl acrylate, hexyl acrylate 2-ethylhexyl acrylate, octyl acrylate, 3,5,5-trimethylhexyl acrylate, decyl acrylate, dodecyl acrylate, hexadecyl acrylate, octadecyl acrylate, octadecenyl acrylate, n-amyl methacrylate, sec-amyl methacrylate, hexyl methacrylate, 2-ethylbutyl methacrylate, octyl methacrylate, 3,5,5-trimethylhexyl methacrylate, decyl methacrylate, dodecyl methacrylate, hexadecyl methacrylate, octadecyl methacrylate, butoxyethyl acrylate or methacrylate or other alkoxyethyl acrylate or methacrylates, methylmethacrylate, ethyl methacrylate, propyl methacrylate, isopropyl methacrylate, butyl methacrylate, sec-butyl methacrylate, t-butyl methacrylate, t-amyl methacrylate, t-amyl acrylate, cyclohexyl acrylate or methacrylate; as well as other α, β-ethylenically unsaturated monomers, such as ethylene, butadiene, vinyl chloride, vinylidene chloride, vinyl acetate, acrylonitrile, and methacrylonitrile.

The copolymers of this invention may be prepared by any standard polymerization process including free radical, anionic. However, a telomerization process wherein a mercaptan is employed as the chain transfer agent is preferred. Illustrative of the mercaptan chain-transfer agents which may be employed are butyl mercaptan, mercaptoacetic acid, mercaptoethanol, 3-mercapto-1,3-propanediol and 2-methyl-2-propane-thiol, t-dodecyl mercaptan, phenyl mercaptan, pentaerythritol tertramercaptopropionate, octyldecyl mercaptan, and tetradecyl mercaptan.

Typically, the copolymers of the instant invention are prepared by reacting a monomer feed mix (containing t-butyl acrylate, a functional comonomer having at least one active crosslinking site, and optionally other reactive monomers) with a catalyst feed mixture at an elevated temperature in the presence of an organic solvent.

The catalyst employed is typically a free radical initiator or a redox catalyst. One can mention, as merely illustrative of suitable catalysts which can be employed, free radical initiators such as hydrogen peroxide, peracetic acid, t-butyl hydroperoxide, di-t-butyl peroxide, dibenzoyl peroxide, benzoyl hydroperoxide, 2,4-dichlorobenzoyl peroxide, 2,5-dimethyl-2,5-bis(hydroperoxy)hexane, perbenzoic acid, t-butyl peroxypivalate, t-butyl peracetate, azo - bis - isobutyronitrile, ammonium persulfate, sodium persulfate, potassium persulfate, sodium perphosphate, potassium perphosphate, and isopropyl peroxycarbonate; and redox catalyst systems such as sodium persulfate-sodium formaldehyde sulfoxylate, cumene hydroperoxide-sodium metabisulfite, hydrogen peroxide-ascorbic acid, and sulfur dioxide-ammonium persulphate.

The catalysts are employed in the usual catalytically effective concentrations which are known to those skilled in the art of polymerization.

Typically, the polymerization process will require the use of a solvent. The solvents which may be employed are those organic solvents which will not interfere with the polymerization reaction. These solvents are well known to one skilled in the art. Illustrative of such solvents are ethoxyethyl acetate, methylene chloride, ethanol, iso-propanol, n-propanol, n-butanol, iso-butanol, tert-butanol; the methyl, ethyl, propyl or butyl esters of acetic acid; acetone, methyl ethyl ketone, benzene, and toluene.

In general, the polymerization reaction is carried out at a temperature of from 50°C to 160°C, with a preferred temperature of from 90°C to 130°C. However, this range will vary depending upon the particular catalyst or catalyst system selected. Reaction pressure may vary from subatmospheric or superatomospheric with atmospheric pressure being preferred.

Reaction time is not critical and may vary from hours to days depending upon the reaction batch size, pressure, temperature, etc. selected.

The coating compositions of this invention comprise mixtures of (1) the t-butyl acrylate/functional monomer/(optionally other ethylenically unsaturated monomer) copolymer of the instant invention, (2) a suitable crosslinker and (3) suitable additives that are known to one skilled in the art of coating formulations. Illustrative of such additives are pigments and fillers, such as titanium dioxide, flow and leveling aids such as silicone surfactants, fluorocarbon based surfactants and pigment dispersants; These coating compositions may be blended by means well known to one skilled in the art. The novel compositions of this invention may be formulated into high solids coatings, i.e., as much as 75 weight percent or higher, although this figure may vary in accordance with the solvent selected, the viscosity desired, the application temperature selected, etc.

The crosslinkers which may be employed will vary with the type of functional crosslinking sites which are present on the copolymer selected. Thus, for copolymers containing active hydroxyl groups crosslinkers including polyepoxides (such as cycloaliphatic epoxides and diglycidyl epoxides), polyfunctional isocyanates, and etherated amino-formaldehyde resins, and mixtures thereof may be employed. For copolymers containing active carboxyl groups crosslinkers including polyepoxides (such as cycloaliphatic epoxides and diglycidyl epoxides), aziridines, carbodiimides, and etherated amino-formaldehyde resins and mixtures thereof may be employed. For copolymers containing active amide groups, crosslinkers including polyfunctional isocyanates, polyepoxides (such as cycloaliphatic epoxides and diglycidyl epoxides), and etherated amino-formaldehyde resins and mixtures thereof may be employed. For copolymers which contain mixtures of active hydroxyl, carboxyl and/or amide groups, mixtures of suitable crosslinkers may be utilized. Preferred crosslinkers include polyepoxides and etherated amino-formaldehyde resins, as these crosslinkers are reactive with active hydroxyl, carboxyl and amide groups.

Illustrative of the polyfunctional isocyanates which may be employed for copolymers containing active hydroxyl and/or amide sites are 3,5,5-trimethyl-1-isocyanato-3-isocyanatomethyl-cyclohexane, di(2 - isocyanatoethyl) - bicyclo(2.2.1) - hept - 5 - ene - 2,3 - dicarboxylate, 2,4 - tolylene diisocyanate, 2,6 - tolylene diisocyanate, 4,4' - diphenylmethane diisocyanate, dianisidine diisocyanate, hexamethylene diisocyanate, the m- and p-xylylene diisocyanates, tetramethylene diisocyanate, dicyclohexyl - 4,4' - methane diisocyanate, cyclohexane - 1,4 - diisocyanate, 1,5 - naphthylene diisocyanate, 4,4' - diisocyanate diphenyl ether, 2,4,6 - tri - isocyanate toluene, 4,4',4" - triisocyanate triphenyl methane, diphenylene - 4,4 - diisocyanate, and the polymethylene polyphenylisocyanates.

Typical representatives of the polyepoxide crosslinkers which may be employed are the cycloaliphatic epoxides described in U.S.—A—3,027,357, 2,890,194 and 2,890,197 (especially column 7, line 11 to column 7, line 38 of 3,027,357), including 3,4 - epoxycyclohexylmethyl - 3,4 - epoxycyclohexane carboxylate, bis(3,4 - epoxycyclohexylmethyl)adipate, bis(2,3 - epoxycyclopentyl) - ether, vinyl cyclohexane dioxide, 2 - (3,4 - epoxycyclohexyl) - 5,5 - spiro - (2,3 - epoxycyclohexane) - m - dioxane, bis(3,4 - epoxycyclohexylmethyl)adipate, endo- and exo-dicyclopentadiene diepoxide and limonene diepoxide.

Illustrative of the amino-formaldehyde resins which are useful for hexakismethoxymethylmelamine, dimethylol ethylene urea, tetramethylol acetylene diurea, tris methoxymethylmelamine, the methyl, butyl, isobutyl ethers of melamine-formaldehyde adducts and the like; the methyl, butyl, isobutyl ethers of benzoguanamine-formaldehyde; and tetra-alkyl glycoluril.

In general, the amount of crosslinker employed will be dependent on the equivalent weight of the crosslinker used, the inherent flexibility of the crosslinker used, the reactivity of the crosslinker with itself, and the degree of hardness/softness or flexibility desired in the final coating. These amounts will vary with the particular functional monomer and crosslinker combination selected, and will be known to one skilled in the art.

Frequently, the crosslinking reaction will require the use of a catalyst. The amounts and types of catalyst needed, if any, are dependent upon the particular active site/crosslinker combination selected and will be well known to one skilled in the art. Thus, for example, when aminoformaldehyde resins are employed as crosslinkers, catalysts such as p-toluene sulfonic acid, naphthalene sulfonic acid, phosphoric acid, dinonyl naphthalene disulfonic acid, or the stannous salt of trifluoromethane sulfonic acid can be used. With cycloaliphatic epoxides catalysts such as stannous octanoate, dibutyltin dilaurate, triflic acid, the reaction product of triflic acid and stannous oxide, diethyl ammonium triflate can be used.

This crosslinking reaction may be performed at reaction conditions well known to one skilled in the art. Typically, temperatures of from 110°C to 200°C are employed. Crosslinking reaction time is not critical and will vary in accordance with the conditions, reactants, etc. selected.

Example 1

A cotelomer having a weight ratio of 60/25/15 of t-butyl acrylate/ethyl acrylate/acrylic acid was prepared for use in a coating formulation in the following manner. To feed mixtures were prepared from the following ingredients:

| Kettle charge | | Monomer feed mixture | | Catalyst feed mixture | |
|---|---|---|---|---|---|
| 2-Ethoxy-ethyl acetate | 44 g. | t-Butyl acrylate | 360 g | VAZO-52* | 10 g |
| | | i-Propyl acrylate | 150 g | 2-Ethoxy-ethyl acetate | 113 g |
| | | Acrylic acid | 90 g | | |
| | | 2-Ethoxy-ethyl acetate | 43 g | | |
| | | t-Dodecyl-mercaptan | 18 g | | |

*VAZO—52=2,2'-azobis(2,4-dimethylvaleronitrile)

4

The kettle charge was heated to 116°C and then the catalyst feed was started. 10 minutes later the monomer feed was begun. After 183 minutes, all of the monomer mixture had been fed to the reactor; and 17 minutes later the feeding of the catalyst mixture was complete. During this time, the temperature was maintained at 113 to 120°C. The reaction mixture was then cooked out for an additional 48-minute period after which the heat was turned off. The solution of cotelomer in 2-ethoxyethyl acetate was allowed to cool to room temperature and then 803 grams of the light yellow colored solution were collected as a residue product. Replicate analysis indicated the total solids in the solution were 74.1% and 74.0% by weight. The solution of cotelomer had a Brookfield viscosity of about 11,500 mPa.s at room temperature. It had a weight average molecular weight of 8,500 as determined by gel permeation chromatography using a calibration based on polystyrene. The cotelomer produced possessed a glass transition temperature of 13°C, as determined by a differential scanning calorimeter.

Example 2

In a manner similar to that described in Example 1 a t-butyl acrylate/ethyl acrylate/2-hydroxyethyl acrylate cotelomer was prepared using the following ingredients:

| Monomer feed mixture | | Catalyst feed mixture | |
|---|---|---|---|
| t-butyl acrylate | 360 g | VAZO-52 | 10 g |
| ethyl acrylate | 167 g | 2-ethoxyethyl acetate | 113 g |
| 2-hydroxyethyl acrylate | 75 g | Kettle charge | |
| 2-ethoxyethyl acetate | 43 g | 2-ethoxyethyl acetate | 44 g |
| t-dodecyl mercaptan | 18 g | | |

The cotelomer produced possessed a glass transition temperature of 10°C as measured by a differential scanning calorimeter.

Example 3

A two-package, high solids coating of the cotelomer prepared and described in Example 2 was prepared in the same manner as described in Example 3. The ingredients used are as follows.

| Pigment grind | |
|---|---|
| Ex. 1 Cotelomer solution (74% solids) | 150 g |
| $TiO_2$ | 135.7 g |
| Silicone surfactant L-5410™R | 0.97 g |
| 2-Ethoxyethanol acetate | 50 g |

After grinding, the pigment was removed, the ball mill was washed with 25 grams of 2-ethoxyethyl acetate (which was added to the grind), and the mixture of grind and wash stored. To make up the paint formulation for spraying, the following ingredients were combined:

| Paint formulation | |
|---|---|
| Pigment grind | 150 g |
| ERL-4221* | 34.4 g |
| 2-Ethoxyethanol acetate | 30 g |
| Stannous octanoate | 0.20 g |

*ERL-4221=3,4-epoxycyclohexylmethyl-3,4-epoxycyclohexane carboxylate (Union Carbide)

This paint formulation, which contained 63.7% total solids and had a Zahn Cup #2 viscosity of 23.5 seconds, was then air sprayed onto steel panels using a conventional, suction-feed spray gun and cured in a forced-air oven at 177°C for 20 minutes.

These panels were then tested for their general coating properties, salt spray resistance, detergent resistance and accelerated outdoor light/humidity exposure resistance. These tests were conducted as follows:

Knoop hardness number—The indentation hardness of the film was determined with a Tukon Hardness Tester equipped with a 25-gram load. ASTM D1474-68, Method A

Crosshatch Adhesion—Films are scribed with razor blades in a crosshatch design. A measure of coating adhesion is obtained by firmly applying high tack tape and pulling off rapidly. The percent coating retained on the substrate is recorded.

Face and Reverse Impact—Panels were impacted by a falling weight with a hemi-spherical tip. Indentations were examined and recorded as the highest mkg (inch-pounds) which did not crack the film. ASTM D2794-69.

Methyl Ethyl Ketone Rubs—The films were rubbed manually with methyl ethyl ketone soaked cheese cloth until the metal panel was exposed or until 100 back and forth cycles were reached. The film appearance was given a 1—5 rating with 1=no charge.

Salt Spray—Continuous exposure to 5% salt fog 34,5±1°C. Panels were exposed either at 15° to vertical or hung vertically. Scribed metal panel was 152 · 305 mm ASTM B117-57T

Detergent Resistance—Coated panels were immersed in 1.5 percent Tide solution maintained at 74°C ASTM D2248-73

Accelerated Outdoor Light/Humidity Exposure—ASTM-G-53-77; QUV cabinet exposure (cyclic ultraviolet testing cabinet) cycle: 4 hours light (FS-40 UV lamps) at 60°C followed by 4 hours condensation (distilled water) at 46°C. The test results are given in Tables I, II, III, and IV.

Comparative experiment A

For comparison purposes, a two-package, high solids coating was prepared from a commercial, acrylic oligomer Acryloid AT-71 (Rohm and Haas Co.). This oligomer had a weight average molecular weight of 25,900 as measured by gel permeation chromatography using a calibration based on polystyrene. The coating was prepared in the same manner as described in Example 3 from the following ingredients.

### Pigment grind

| | |
|---|---|
| Acryloid AT-71 (50% solids) | 200 g |
| TiO$_2$ | 113 g |
| Silicone surfactant L-5410 | 0.81 g |
| 2-Ethoxyethyl acetate | 50 g |

### Paint Formulation

| | |
|---|---|
| Pigment grind | 150 g |
| ERL-4221 | 25.33 g |
| 2-Ethoxyethyl acetate | 4.3 g |
| Stannous octanoate | 0.17 g |

This paint formulation, which contained 51.8% total solids and had a Zahn Cup #2 viscosity of 23.5 seconds, was then air sprayed onto steel panels using a conventional, suction-feed spray gun and cured in a forced-air oven at 177°C for 20 minutes. The panels were then tested as described in Example .

The test results are given in Tables I, II, III and IV.

**0 103 146**

TABLE I
General properties of coatings before accelerated aging tests

| | Example | | |
|---|---|---|---|
| Property | 2 | 3 | A |
| Knoop hardness | 18.9 | 16.9 | 17.9 |
| Crosshatch adhesion, % loss | 0 | 0 | 0 |
| Gardner impact (in.lbs) mkg<br>Direct | (28) 0,322 | (26) 0,299 | (30) 0,345 |
| Reverse | ( 1) 0,0115 | ( 1) 0,115 | ( 2) 0,0230 |
| MEK rubs* | 1 | 2+ | 3+ |

\* Coating subjected to 100 MEK (methyl ethyl ketone) double rubs. Then film was rated with the following code: 1=no change, 2=scratched, 3=gloss loss. A plus sign (+) indicates a greater degree of change than a minus sign (−) a lesser degree of change than is usually attributed to a given rating.

TABLE II
Results of salt spray* testing of coatings

| | Example | | |
|---|---|---|---|
| | 2 | 3 | A |
| Exposure time | Blisters/creep | Blisters/creep | Blisters/creep |
| 288 h | 9/0 | 9/0 | 9/0 |
| 432 h | 6/0 | 8/0 | 5/0 |
| 1056 h | ** | 7/0 | ** |
| 1224 h | — | 7/6,35 mm | — |

\* ASTM-B-117-73 Test. Continuous exposure to 5% salt fog at 94±2°F (34,5±1°C). Blister size rating on a 10 to 0 scale: 10=no change, 9=fine, 5=medium, 1=large. Creep measured in inches.
\*\*Test discontinued after 432 h which was considered the failure point.

TABLE III
Results of detergent* testing of coatings

| | Example | | |
|---|---|---|---|
| | 2 | 3 | A |
| Exposure time | Blisters**/<br>hardness | Blisters**/<br>hardness | Blisters**/<br>hardness |
| 30 h | 9F/H | 9VF/H | 8F/H |
| 78 h | 6F/H | 8F/H | 6MD/F |
| 94 h | 6F/H | 7F/H | 6MD/2B |
| 150 h | 5F/H | 5F/3B | *** |
| 174 h | 4F/F | *** | — |

\* ASTM-D-2248-73, 1.5% Tide solution at 165°F (74°C).
\*\* ASTM-D-714-56; Blister size rating on a 10 to 0 scale: 10=no change, 9=fine, 5=medium, 1=large; Frequence rating: F=few, M=moderate, D=dense (V=very).
\*\*\* Test discontinued at previous time which was considered as the failure point.

7

TABLE IV
Accelerated outdoor light/humidity exposure testing with QUV testing apparatus

| Exposure time | 20° Gloss** | | |
| --- | --- | --- | --- |
| | Ex. 2 | Ex. 3 | Ex. A |
| 0 (initial) | 72 | 69 | 70 |
| 272 h | 70 (97%) | 72 (104%) | 70 (95%) |
| 488 h | 66 (92%) | 64 (93%) | 57 (77%) |
| 680 h | 66 (92%) | 57 (83%) | 38 (51%) |
| 1016 h | 60 (83%) | 43 (62%) | ** |
| 1352 h | 60 (83%) | 38 (55%) | — |
| 1520 h | 48 (67%) | 24 (35%) | — |
| 1688 h | 45 (63%) | ** | — |
| 1856 h | 39 (54%) | — | — |
| 2024 h | 37 (51%) | — | — |

\* Number in parentheses are % gloss retention relative to the initial value. All values given are the average of 5 measurements.
\*\* Test discontinued after previously stated time was considered to be the failure time.

The above results indicate that the coatings of this invention possess unexpectedly superior weatherable properties relative to commercial acrylic-based coatings which do not contain t-butyl acrylate. This is shown most clearly by examination of Tables III and IV wherein the coatings of this invention displayed enhanced detergent and ultra-violet light resistance.

Examples 4 and 4(A) and comparative experiments E, F, F(A) and G
Using a pigment grind similar to that employed in Example 2, high solids coatings were prepared utilizing the cotelomers produced in Example 1 (Examples 4 and 4(A)). These cotelomers were crosslinked utilizing the crosslinkers shown in Table V, below. These coatings were then spray applied to panels as described in Example 2.

In order to test the effects of long-term outdoor exposure on these coatings, as well as those produced in Examples 2, and 3, panels were sent to Miami, Florida. Here the panels were placed outdoors facing south, while tilted at a 45° angle.

The panels were left in this position and exposed to the elements for the periods indicated in Table V, below. The panels were examined for their 60° gloss, color and chalk. Chalk ratings are based upon photographs appearing in Exposure Standards Manual, Federation of Societies for Paint Technology. Color is rated on a 10—0 scale by visual observation, employing the following scale:

       10—No. change
        9—Very slight
        8—Slight
        6—Definite
        4—Medium
        2—Bad
        0—Very bad

The results of such testing are shown in Table V below:

8

### TABLE V
45° South, Florida outdoor exposure data

| Example | Crosslink agent | Initial 60° gloss | After 12 Mo. exposure | | After 24 Mo. exposure | | | % Gloss retention |
|---|---|---|---|---|---|---|---|---|
| | | | 60° gloss | Color | 60° Gloss | Color | Chalk | |
| 2 | ERL-4221 | 76 | 64 | 9 | 21 | 9 | 9.5 | 28 |
| 3 | Resin 3 | 85 | 78 | 9 | * | * | * | |
| 4 | Resin 1 | 83 | 73 | 9 | 63 | 9 | 10 | 76 |
| 4(A) | Resin 2 | 72 | 61 | 9 | 46 | 9 | 10 | 64 |

ERL-4221 =3,4-epoxycyclohexylmethyl-3,4-epoxycyclohexane carboxylate
Resin 1 =hexakismethoxymethyl melamine
Resin 2 =tetrabutoxymethyl glycoluril
Resin 3 =Cymel™ 325, American Cyanamid, a commercially available etherated melamine formaldehyde resin
=test results not available.

Claims for the Contracting States: BE, CH, DE, FR, GB, IT, LI, LU, NL, SE

1. A copolymer having a glass translation temperature of less than about 50°C comprising:

(a) from 10 to 90 weight percent t-butyl acrylate units;

(b) from 1 to 30 weight percent of units derived from a functional comonomer containing at least one active crosslinking site; and

(c) from 5 to 85 weight percent of units derived from other ethylenically unsaturated monomers which are capable of polymerizing with t-butyl acrylate, excluding styrene.

2. The copolymer of claim 1 wherein t-butyl acrylate units are present in an amount of from 20 weight percent to 70 weight percent.

3. The copolymer of claim 1 or 2 wherein the functional comononer units are present in an amount of from 5 to 20 weight percent.

4. The copolymer of claims 1 to 3 wherein the functional comonomer units, component (b), are derived from acrylic acid, methacrylic acid, hydroxyethyl acrylate, hydroxyethyl methacrylate, hydroxypropyl acrylate, hydroxypropyl methacrylate, and mixtures thereof.

5. The copolymer of claims 1 to 4 wherein the ethylenically unsaturated monomer units, component (c), are present in an amount of from 5 to 60 weight percent.

6. A copolymer of claims 1 to 5 comprising:

(a) from 20 to 70 weight percent t-butyl acrylate units;

(b) from 5 to 20 weight percent of units derived from one of acrylic acid, methacrylic acid, hydroxyethyl acrylate, hydroxyethyl methacrylate, hydroxypropyl acrylate, hydroxypropyl methacrylate and mixtures thereof, and

(c) from 5 to 60 weight percent of units derived from other ethylenically unsaturated monomers which are capable of polymerizing with t-butyl acrylate.

7. A coating composition comprised of the copolymer of claims 1 to 6 and a crosslinker.

8. The coating composition of claim 7 wherein the crosslinker is a polyepoxide or an etherified aminoformaldehyde resin.

9. The coating composition of claim 8 wherein the polyepoxide is a cycloaliphatic epoxide or a diglycidyl epoxide.

**Claims for the Contracting State AT:**

1. A process for producing a copolymer having a glass transition temperature of less than about 50°C comprising:

(a) from 10 to 90 weight percent t-butyl acrylate units;

(b) from 1 to 30 weight percent of units derived from a functional comonomer containing at least one active crosslinking site; and

(c) from 5 to 85 weight percent of units derived from other ethylenically unsaturated monomers which are capable of polymerizing with t-butyl acrylate, excluding styrene, by any standard polymerisation process of the monomers.

2. The process of claim 1 wherein the polymerization takes place in the presence of a catalyst, and an organic solvent at an elevated temperature.

3. The process of claim 1 or 2 for producing a copolymer comprising:

(a) from 20 to 70 weight percent t-butyl acrylate units;

(b) from 5 to 20 weight percent of units derived from one of acrylic acid, methacrylic acid, hydroxyethyl acrylate, hydroxyethyl .methacrylate, hydroxypropyl acrylate, hydroxypropyl methacrylate and mixtures thereof, and

(c) from 5 to 60 weight percent of units derived from other ethylenically unsaturated monomers which are capable of polymerizing with t-butyl acrylate.

4. The process of claim 1 to 3 for producing a copolymer wherein the functional comonomer units, component (b), are derived from acrylic acid, methacrylic acid, hydroxyethyl acrylate, hydroxyethyl methacrylate, hydroxypropyl acrylate, hydroxypropyl methacrylate, and mixtures thereof.

5. A coating composition comprised of the copolymer produced according to process of claim 1 to 4—and a suitable crosslinker.

6. The coating composition of claim 4 wherein the crosslinker is a polyepoxide or an etherified aminoformaldehyde resin.

7. The coating composition of claim 5 wherein the polyepoxide is a cycloaliphatic epoxide or a diglycidyl epoxide.

**Patentansprüche für die Vertragsstaaten: BE, CH, DE, FR, GB, IT, LI, LU, NL, SE:**

1. Copolymer mit einer Glasübergangs-Temperatur von weniger als etwa 50°C, enthaltend

a) 10 bis 90 Gew.-% t-Butylacrylat-Einheiten,

b) 1 bis 30 Gew.-% Einheiten, die sich von einem funktionellen Copolymeren, enthaltend zumindest eine aktive vernetzende Stelle ableiten, und

# 0 103 146

c) 5 bis 85 Gew.-% von Einheiten, die sich von anderen ethylenisch ungesättigten Monomeren ableiten, die mit t-Butyl-acrylat polymerisierbar sind—ausschließlich Styrol-.

2. Copolymer nach Anspruch 1, in dem die t-Butylacrylat-Einheiten in einer Menge von 20 bis 70 Gew.-% enthalten sind.

3. Copolymer nach Anspruch 1 oder 2, worin die Einheiten des funktionellen Copolymeren in einer Menge von 5 bis 20 Gew.-% enthalten sind.

4. Copolymer nach Anspruch 1 bis 3, worin die Einheiten des funktionellen Copolymeren— Komponente (b)—sich ableiten von Acrylsäure, Methacrylsäure, Hydroxyethylacrylat, Hydroxyethylmethacrylat, Hydroxypropylacrylat, hydroxypropylmethacrylat oder deren Gemischen.

5. Copolymer nach Anspruch 1 bis 4, in dem die Einheiten der ethylenisch ungesättigten Monomeren—Komponente (c)—in einer Menge von 5 bis 60 Gew.-% enthalten sind.

6. Copolymer nach Anspruch 1 bis 5, enthaltend,
a) 20 bis 70 Gew.-% von t-Butylacrylat-Einheiten,
b) 5 bis 20 Gew.-% Einheiten von Acrylsäure, Methacrylsäure, Hydroxyethylacrylat, Hydroxyethylmethacrylat, Hydroxypropylacrylat und/oder Hydroxypropylmethacrylat und
c) 5 bis 60 Gew.-% von Einheiten ethylenisch ungesättigter Monomerer, die mit t-Butylacrylat polymerisierbar sind.

7. Anstrichmasse, enthaltend die Copolymeren der Ansprüche 1 bis 6 und ein Vernetzungsmittel.

8. Anstrichmasse nach Anspruch 7, worin das Vernetzungsmittel ein Polyepoxid oder ein verethertes Aminoformaldehyd-Harz ist.

9. Anstrichmasse nach Anspruch 8, worin das Polyepoxid ein cycloaliphatisches Epoxid oder ein Diglycidylepoxid ist.


**Patentansprüche für den Vertragsstaat AT:**

1. Verfahren zur Herstellung eines Copolymeren mit einer Glasübergangs-Temperatur von weniger als etwa 50°C, enthaltend
a) 10 bis 90 Gew.-% t-Butylacrylat-Einheiten,
b) 1 bis 30 Gew.-% Einheiten, die sich von einem funktionellen Copolymeren, enthaltend zumindest eine aktive vernetzende Stelle ableiten, und
c) 5 bis 85 Gew.-% von Einheiten, die sich von anderen ethylenisch ungesättigten Monomeren ableiten, die mit t-Butyl-acrylat polymerisierbar sind—ausschließlich Styrol-durch übliche Verfahren zur Polymerisation der Monomeren.

2. Verfahren nach Anspruch 1, worin die Polymerisation in Gegenwart eines Katalysators und eines organischen Lösungsmittels bei erhöhter Temperatur stattfindet.

3. Verfahren nach Anspruch 1 oder 2 zur Herstellung eines Polymeren enthaltend
a) 20 bis 70 Gew.-% von t-Butylacrylat-Einheiten;
b) 5 bis 20 Gew.-% Einheiten, die sich von einem funktionellen Copolymeren enthaltend zumindest eine aktive vernetzende Stelle ableiten, und
c) 5 bis 60 Gew.-% von Einheiten, die sich von anderen ethylenisch ungesättigten Monomeren ableiten, die mit t-Butylacrylat polymerisierbar sind.

4. Verfahren nach Anspruch 1 bis 3 zur Herstellung von Copolymeren, in denen die Einheiten des funktionellen Copolymeren—Komponente (b)—sich ableiten von Acrylsäure, Methacrylsäure, Hydroxyethylacrylat, Hydroxyethylmethacrylat, Hydroxypropylacrylat, hydroxypropylmethacrylat oder deren Gemischen.

5. Anstrichmasse, enthaltend die Copolymeren, die nach den Ansprüchen 1 bis 4 hergestellt worden sind, und ein Vernetzungsmittel.

6. Anstrichmasse nach Anspruch 5, worin das Vernetzungsmittel ein Polyepoxid oder ein verethertes Aminoformaldehyd-Harz ist.

7. Anstrichmasse nach Anspruch 6, worin das Polyepoxid ein cycloaliphatisches Epoxid oder ein Diglycidylepoxid ist.

**Revendications pour les Etats Contractants: BE, CH, DE, FR, GB, IT, LI, LU, NL, SE:**

1. Copolymère ayant une température de transition vitreuse inférieure à environ 50°C, comprenant:
(a) 10 à 90 % en poids de motifs acrylate de tertio-bytyle;
(b) 1 à 30 % en poids de motifs dérivés d'un comonomère fonctionnel contenant au moins un site actif de réticulation; et
(c) 5 à 85 % en poids de motifs dérivés d'autres monomères à non-saturation éthylénique qui sont capables de se polymériser avec l'acrylate de tertio-butyle, à l'exclusion du styrène.

2. Copolymère suivant la revendication 1, dans lequel les motifs acrylate de tertio-butyle sont présents en une quantité de 20 % en poids à 70 % en poids.

3. Copolymère suivant la revendication 1 ou 2, dans lequel les motifs comonomères fonctionnels sont présents en une quantité de 5 à 20 % en poids.

4. Copolymère suivant les revendications 1 à 3, dans lequel les motifs comonomères fonctionnels constituant le composant (b) sont dérivés de l'acide acrylique, de l'acide méthacrylique, de l'acrylate d'hydroxyéthyle, du méthacrylate d'hydroxyéthyle, de l'acrylate d'hydroxypropyle, du méthacrylate d'hydroxypropyle et de leurs mélanges.

5. Copolymère suivant les revendications 1 à 4, dans lequel les motifs monomères à non-saturation éthylénique constituant le composant (c) sont présents en une quantité de 5 à 60 % en poids.

6. Copolymère suivant les revendications 1 à 5, comprenant:
(a) 20 à 70 % en poids de motifs acrylate de tertio-butyle;
(b) 5 à 20 % en poids de motifs dérivés de l'un des composés acide acrylique, acide méthacrylique, acrylate d'hydroxyéthyle, méthacrylate, d'hydroxyéthyle, acrylate d'hydroxypropyle, méthacrylate d'hydroxypropyle et leurs mélanges, et
(c) 5 à 60 % en poids de motifs dérivés d'autres monomères à non-saturation éthylénique qui sont capables de se polymériser avec l'acrylate de tertio-butyle.

7. Composition de revêtement, constituée du copolymère suivant les revendications 1 à 6 et d'un agent de réticulation.

8. Composition de revêtement suivant la revendication 7, dans laquelle l'agent de réticulation est un polyépoxyde ou une résine d'aminoformaldéhyde éthérifié.

9. Composition de revêtement suivant la revendication 8, dans laquelle le polyépoxyde est un époxyde cycloaliphatiqe ou un époxyde de diglycidyle.

**Revendications pour l'Etat Contractant AT:**

1. Procédé de production d'un copolymère ayant une température de transition vitreuse inférieure à environ 50°C, comprenant:
(a) 10 à 90 % en poids de motifs acrylate de tertio-butyle;
(b) 1 à 30 % en poids de motifs dérivés d'un comonmère fonctionnel contenant au moins un site actif de réticulation; et
(c) 5 à 85 % en poids de motifs dérivés d'autres monomères à non-saturation éthylénique qui sont capables de se polymériser avec l'acrylate de tertio-butyle, à l'exclusion du styrène, par un procédé classique quelconque de polymérisation des monomères.

2. Procédé suivant la revendication 1, dans lequel la polymérisation a lieu en présence d'un catalyseur et d'un solvant organique à une température élevée.

3. Procédé suivant la revendication 1 ou 2, pour la production d'un copolymère comprenant:
(a) 20 à 70 % en poids de motifs acrylate de tertio-butyle;
(b) 5 à 20 % en poids de motifs dérivés de l'un des composés acide acrylique, acide méthacrylique, acrylate d'hydroxyéthyle, méthacrylate d'hydroxyéthyle, acrylate d'hydroxypropyle, méthacrylate d'hydroxypropyle et leurs mélanges, et
(c) 5 à 60 % en poids de motifs dérivés d'autres monomères à non-saturation éthylénique qui sont capables de se polymériser avec l'acrylate de tertio-butyle.

4. Procédé suivant les revendications 1 à 3, pour la production d'un copolymère dans lequel les motifs comonomères fonctionnels constituant le composant (b) sont dérivés de l'acide acrylique, de l'acide méthacrylique, de l'acrylate d'hydroxyéthyle, du méthacrylate d'hydroxyéthyle, de l'acrylate d'hydroxypropyle, du méthacrylate d'hydroxypropyle et de leurs mélanges.

5. Composition de revêtement, constituée du copolymère produit conformément au procédé suivant les revendications 1 à 4, et d'un agent de réticulation convenable.

6. Composition de revêtement suivant la revendication 4, dans laquelle l'agent de réticulation est un polyépoxyde ou une résine d'aminoformaldéhyde éthérifié.

7. Composition de revêtement suivant la revendication 5, dans laquelle le polyépoxyde est un époxyde cycloaliphatique ou un époxyde de diglycidyle.